Europäisches Patentamt

European Patent Office

Office européen des brevets

(19)

(11) Publication number: **0 251 394 B1**

# EUROPEAN PATENT SPECIFICATION

(45) Date of publication of patent specification: **17.04.91**   (51) Int. Cl.⁵: **B01D 33/04, E21B 21/06**

(21) Application number: **87201175.4**

(22) Date of filing: **18.06.87**

(54) **A method of separating and recovering a granulate from a viscous suspension containing said granulate, and apparatus for carrying out said method.**

(30) Priority: **19.06.86 NL 8601595**
   **28.10.86 NL 8602703**

(43) Date of publication of application:
   **07.01.88 Bulletin 88/01**

(45) Publication of the grant of the patent:
   **17.04.91 Bulletin 91/16**

(84) Designated Contracting States:
   **AT DE ES FR GB IT NL**

(56) References cited:
   **EP-A- 0 105 183**
   **FR-A- 1 418 894**
   **FR-A- 2 180 049**
   **FR-A- 2 403 813**
   **GB-A- 1 298 070**

(73) Proprietor: **Mudcleaning Services Amsterdam B.V.**
   **Cornelis Schuytstraat 56**
   **NL-1071 JL Amsterdam(NL)**

(72) Inventor: **Rost Onnes, Pieter**
   **Van Breestraat 138**
   **NL-1071 ZW Amsterdam(NL)**

(74) Representative: **Smulders, Theodorus A.H.J., Ir. et al**
   **Vereenigde Octrooibureaux Nieuwe Parklaan 107**
   **NL-2587 BP 's-Gravenhage(NL)**

## Description

This invention relates to a method of separating and recovering a granulate from a viscous suspension containing said granulate by supplying the suspension in a layer on an endless sieve belt guided around return rollers and effecting a separation into a sieve residue containing the granulate, which remains behind on the belt and a stream of material passed through the belt, and in which said stream of material is collected between the forward and return runs of the sieve conveyor belt and the separated granulate is dumped from the conveyor belt.

A similar process is disclosed in Netherlands patent application 7804994, which relates to the recovery of a basic suspension or slurry from spent, viscous drilling mud.

The basic suspension is suitable for preparing a fresh drilling mud for use in boring a hole in the earth by rotary drilling in prospecting for oil or gas. As such, the above prior process is commensurate with developements in the oil industry over the last 10-15 years towards reducing the discharge of spent drilling muds during the drilling phase of oil and gas wells in an attempt to satisfy tightened up environmental requirements. In addition to the adapted selection of drilling mud types containing raw materials which are 'friendly' to the environment, the technology of cuttings removal has been greatly improved, too.

Drilling muds may be slurries on an oil basis or on a water basis and may contain, as described in Dutch patent application 7804994, various insoluble solids as additives, for example, barite and gypsum, and the spent slurry additionally contains the solids loosened during boring, called cuttings, as a granulate.

The recovery of the basic suspension or slurry means in practice that the cuttings should be separated from the spent mud as selectively as possible. The remaining basic slurry contains a larger or smaller part of the various additives and can be re-used as a drilling mud as such or after adjustment of its composition.

The prior process is effected in two distinct main steps, that is to say, a sieving step, in which the spent viscous suspension is separated into a solid sieve residue remaining behind on the sieve and a stream of material passed by the sieve, which is stored in a reservoir, and a step in which the solid sieve residue is processed further. The solid sieve residue separated in the prior method contains in addition to the cuttings a portion of the insoluble additives. In the processing step, the solid sieve residue is first dried and only then processed, preferably by effecting a separation of the solid components into layers on the basis of differences in specific gravity. The cuttings thus obtained are discharged, while the additives obtained can be re-used in preparing drilling mud.

The sieving step forming part of the prior process comprises, in turn, two stages, namely a sieving or filtering stage under the influence of gravity and subsequently a filtering stage under pressure. The entire sieving step is effected in the prior process by means of a sieving belt passed around return rollers with the filtering step to be carried out under pressure being realized by maintaining a partial vacuum under the forward run or sieving run of the sieving conveyor belt.

It is an object of the present invention to provide a method of the kind described which is considerably simplified and thereby can be better controlled and has an improved efficiency.

It is a further object of the present invention to provide a method which is more generally applicable, and in which the separated and recovered granulate is not only a waste material, such as the cuttings in the above-described method of processing spent drilling mud but may alternatively be a main product. One example is the so-called coal slurry process, in which pulverized coal is transported, made up into a suspension in a carrier liquid, with the viscosity of the slurry being adjusted to a desired value by adding suitable additives. At the destination the pulverized coal should be re-separated and the carrier liquid can be recycled.

According to the present invention, the objects indicated above are achieved by carrying out the method in such a manner that the supply of granulate containing suspension by pouring from a height of at least 20cm. onto the sieve belt, a stream of air maintained by one or more air moving means and passed downwardly through the conveyor belt, the velocity of the sieve conveyor belt and/optionally a vibration to which the belt is exposed, are mutually adjusted in such a manner that there is created and maintained at least one edge forming a borderline between the suspension region and the granulate region where the liquid stream has already passed downwardly through the belt.

Apart from a front edge forming a borderline between a suspension region and a granulate region, since the layer of suspension is thinning out towards this (irregularly formed) front edge borderline, "holes" are continuously appearing and disappearing in the suspension layer, mostly in the area directly trailing said front edge. These "holes" are defined by further "edges" and form isolated granulate regions within the suspension area.

The invention is based on observations made in experiments with spent drilling muds. It turned out that when the layer of spent slurry has a free edge and this edge is exposed to a stream of air generated by one or more air moving means and passed downwardly through the sieve conveyor belt, calving of the slurry occurs at the edge concerned. During the calving, the spent suspension is separated into a relatively thin layer of cuttings remaining behind on the sieve conveyor belt and a stream of material passed by the sieve conveyor belt. This stream of material is a suspendion of a composition that can serve as a basis for preparing fresh drilling mud by some adjustment of its composition. It may also be, however, that the composition of the stream of material passed is immediately suitable for re-use as drilling mud and can be recycled to the active tanks. The layer of cuttings remaining behind on the sieve conveyor belt, as obtained in the method according to the invention contains less adhering drilling fluid than is the case with the present solids control equipment used for primary separation and therefore the use of the separation method of the invention renders further processing of the cuttings unnecessary.

A viscous suspension, as used herein, is a suspension whose viscosity, by nature or after adjustment, is such that the suspension can be used as a carrier for the granulate during transport thereof. A suitable value of the viscosity in this regard corresponds to a funnel viscosity of at least about 40 sec.

The condition in the method according to the invention that the layer of spent suspension placed on the sieve conveyor belt should have a free edge means in practice that the surface of the sieve conveyor belt located between the return rollers must not be completely covered with the layer or, in other words, it must be ensured that a portion of the surface is left free. A free forward edge or front edge can be formed, as viewed in the direction of travel of the sieve, in the layer of spent suspension placed on the sieve conveyor belt in the region between the return rollers by attuning, in a given sieve conveyor belt with a given mesh size, the rate of supply of spent suspension and the velocity of the sieve conveyor belt to each other.

The velocity at which the air stream is passed through the sieve conveyor belt partly effects the calving process at the free edge. A suitable air stream velocity for the purposes of the present invention averages 4-5 meter/sec.

Mesh widths for the sieve belt are partly selected in dependence upon the nature of the spent suspension, for example, its viscosity. 60 or 80 mesh (Tyler Standard) sieves having 24 or 31 openings/cm are suitable, but sizes of 40 or 120 mesh (16 or 47 opening/cm) (or finer) are suitable under certain conditions.

In contrast to the known separation process, in which the spent suspension is exposed in the form of a continuous layer to a considerable pressure differential across the layer of spent suspension, produced by maintaining under the sieving run of the belt carrying the layer a greatly reduced pressure, for example, by means of a vacuum pump, it is ensured in the method according to the present invention that the sieving surface is not completely covered with a continuous layer and that the available layer is exposed to the effect of a strong air displacement through the sieving belt, brought about, for example, by one or more blowers.

The method according to the invention is considerably simpler to control and, by definition, insensitive to any disturbance of the coherence of the layer carried by the sieving belt. In the prior method such a disturbance immediately causes a considerable reduction in efficiency of the vacuum pump. Moreover, a vacuum pump is considerably less economic than an air displacing means such as a blower as far as power consumption is concerned.

In the method according to the invention, the separation effect is promoted by subjecting the layer of suspension on the sieving belt to vibration in combination with the air stream.

The invention also relates to an apparatus for carrying out the method, as defined in claim 4.

Furthermore, in the apparatus according to the invention, the sieve run of the sieve belt may be supported on one or more liquid discharging means arranged to exert a scraping action on the sieve conveyor belt during operation.

By pouring the viscous suspension to be separated onto the sieve belt from a certain height, it is achieved that the impact force generated at the sieve belt promotes its separation effect.

Examples of suitable liquid discharging means with a scraping action are strips and so-called foils, such as the hydrofoils used in the papermaking industry.

Passing the sieve run of the belt over the liquid discharging strips may, among other things, lead to a reduced pressure locally under the sieve belt directly downstream of one or more strips, which again promotes the passage of material through the sieve belt.

Both the pouring of the viscous suspension to be treated on the sieve belt and the passage of the sieve belt over the liquid discharging means in combination with maintaining a relatively high belt velocity and rate of air displacement turn out to generate such strong vibrations in the sieve belt that, in particular in the case of spent suspensions with a gel structure, a favourable separation result is promoted, which exceeds the sum of the results of each of these measures separately. To further enhance this effect, the apparatus according to the invention may be provided with one or more vibrating means engaging with the sieve belt.

Owing to the combination of process conditions selected according to the present invention, virtually complete separation can be achieved over a surprisingly short path of travel, whereby virtually exclusively the cuttings remain behind on the sieve conveyor belt, which are substantially dry to the touch, and the insoluble additives are practically completely entrained by the stream of material passed by the sieve conveyor belt. This stream of material is essentially a mixture of the basic suspension to be recovered and air. After separation of the basic suspension, it can be recycled to the drilling rig as such or with minor adjustment of its composition. A second step, in which the remaining solid sieve residue is processed to recover any solid additives contained therein is therefore unnecessary in the method of the present invention.

The invention will now be described in more detail with reference to the accompanying drawings, which show, by way of example, one embodiment of apparatus for use in the method for processing drilling mud contaminated with cuttings.

In said drawings,

Fig. 1 diagrammatically shows a separating apparatus in side-elevational view; and

Fig. 2 shows the forward part of the sieving run, as viewed in the direction of travel of the belt, supported on a plurality of liquid discharging strips.

Referring to the drawings, there is shown a separating apparatus comprising a sieve belt 1 with a forward or sieve run 20 and a return run 21. Belt 1 is passed around driving roller 23 and return roller 22. Arrows P indicate the direction of rotation of the respective drive and return rollers 23 and 22 respectively show the direction of travel of the belt.

Disposed in the space between the sieving run 20 and the return run 21 of sieve belt 1 are three open-topped receptacles 2, 3, 4, so that the plane of the open top is spaced a relatively short distance from the underside of sieving run 20. The row of receptacles 2, 3, 4 substantially spans the distance between driving roller 23 and return roller 22.

Receptacles 2, 3 and 4 are each connected to a system of ducts 8, 9 and 10, respectively, with each system of ducts being composed of a duct, not shown, having one end connected to the corresponding receptacle and the other end branching into the respective ducts 11, 12 and 13, which connect through respective lines 33, 34 and 35 to the respective blowers 30, 31, 32, and into respective ducts 14, 15, 16, terminating in a buffer vessel 25, which collects the basic suspension separated from the stream of material poured on the sieve conveyor belt, which suspension forms a liquid seal in ducts 14, 15 and 16.

The end portions of ducts 11, 12 and 13 and 14, 15, 16 connected to the branching areas, and of the ducts, not shown, connected to receptacles 2, 3, 4 are substantially flat with a rectangular cross-sectional configuration. It is recommendable to provide air stream guide means 5, 6, 7 in the zone of the branching areas, which also function as splash guards, to prevent that, at the prevailing high air stream velocities basic suspension already separated should not, when splashing, be entrained to the atmosphere as a secondary effect.

Shown at 28 is a supply line with which spent drilling mud is supplied to the separating apparatus via the applicator tank 29. Applicator tank 29 comprises a pouring slit 24, through which the suspension is poured onto the sieve belt from a height of free fall.

Buffer vessel 25 connects through line 26 to reservoir 27. Through line 36 the basic suspension contained in reservoir 27 can be recycled to the drilling site.

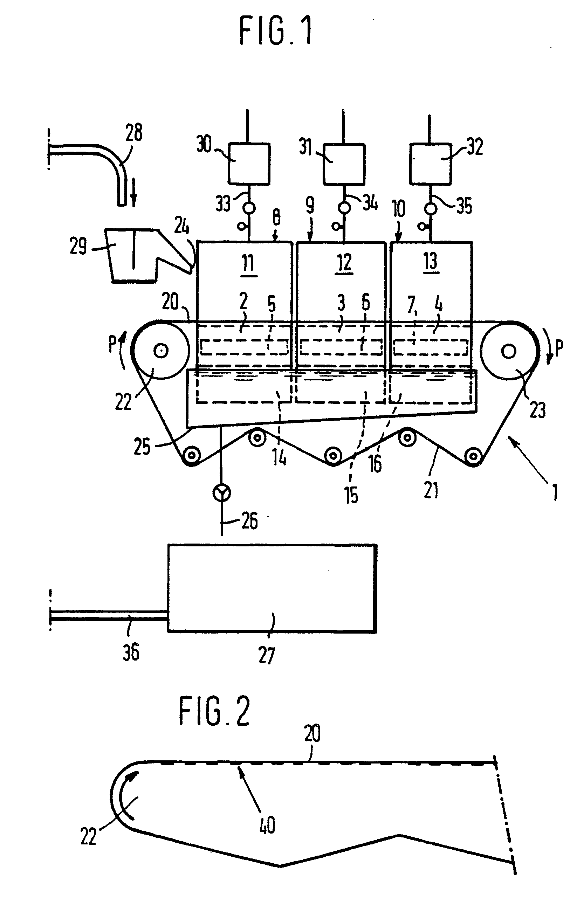

Shown at 40 (Fig.2) are a plurality of liquid discharging strips, which may be of a type as used in the papermaking industry.

In summary, the operation of the apparatus according to the invention is as follows. The spent drilling mud is continuously supplied through line 28 to applicator tank 29. From tank 29, the spent suspension is poured in a layer onto the belt. The sieving conveyor belt rotates in the direction indicated by arrows P. Under the influence of the action of the blowers, a strong air stream is sucked through the sieving run 20 of conveyor belt 1. During the further transport of the layer in the direction of driving roller 23, under the influence of the air stream, as shown hereinbefore, the liquid components and the solid insoluble components are virtually entirely discharged from the spent-suspensionlayer and collected in receptacles 2, 3, 4. The material is thence moved further in the direction along air guide means 5, 6, 7. The stream of air is discharged to the atmosphere through ducts 11, 12, 13, lines 33, 34 and 35 and blowers 30, 31, 32.

The basic suspension continuously flows away through ducts 14, 15, 16 and the liquid seals maintained therein to buffer vessel 25, and via this vessel to reservoir 26.

The regeneration of spent drilling mud has always been a technological problem that was difficult to solve. As shown hereinbefore and illustrated in the accompanying drawings, the present invention provides a solution that is technologically relatively simple. The invention is also however, applicable to other systems in which one or more solids are dispersed in a viscous liquid, for example, as provided in the preparation on a technical scale of fruit juice by pressing fruits, for example, the preparation of apple juice from apples. The method according to the invention makes it possible to produce a clear fruit juice, using a sieve belt with which the fruit pulp is separated from the suspension thereof in the fruit juice while simultaneously passing a relatively large stream of air, produced by blowers, through the layer of separated fruit pulp, with a relatively small pressure drop across the pulp layer.

The invention is also applicable to the transportation of granulate material suspended in a quantity of flowing viscous carrier liquid to separate the granulate material at the destination.

By way of illustration, a number of experiments were carried out with drilling mud, using an apparatus according to the invention designed as shown in the drawings.

The sieve belt 1 had a sieve area of about 160 x 110 cm. The belt velocity was variable from 0 to about 10 m/min. Blowers 30,31,32 had together an air displacement capacity of about 15000 $m^3$/hour, leading to linear velocities of 4-5 m/sec.

The experiments concerned drilling muds on both oil and water basis.

The results were as follows:

Examples

A.   Drilling mud on oil basis


Mud characteristics:

| | |
|---|---|
| Specific density | 1.36 |
| Plastic viscosity | $5.10^{-2}$ Pa.s* |
| Yield point | (9.1 Pa)* |
| Gel value 0'/10' | (0.7-7.7 Pa)* |
| Solids content | 16% |
| Water content | 29% |
| Oil content | 55% |

*Measured at ambient temperature

## Sieving capacities achieved

| | |
|---|---|
| Using 60 mesh (24 openings/cm) sieves | 50 m³ hour |
| Using 80 mesh (31 openings/cm) sieves | 40 m³/hour |

B. ## Drilling mud on the basis of fresh water (so-called 'spudmud', i.e., drilling mud as used during initial drilling)

## Mud characteristics

| | |
|---|---|
| Specific density | 1.15 |
| Viscosity | 40 sec.mf* |
| Plastic viscosity | 9.5 cp $(9.5 \times 10^{-3} \, Pa \cdot s)$ |
| Yield point | 7 lbs/100 sqft (3.4 Pa) |
| Gel values 0'/10' | 5/9 lbs/100 sqft (2.4-4.4 Pa) |
| Cuttings concentration | 5% Mikhart 130** |

*Running time of the drilling mud, determined by the Marsh funnel

**Ground shells having particle sizes of about 35-325 mesh to simulate cuttings.

## Sieve capacities achieved:

| | |
|---|---|
| with 60 mesh (24 openings/cm) sieves | 87 m³/hour |
| With 120 mesh (47 openings/cm) sieves | 30 m³/hour |

After increasing viscosity to 90 sec.Mf.:

| | |
|---|---|
| using 80 mesh (31 openings/cm) sieves | 15 m³ hour |

## C. High-viscosity spudmud

### Mud characteristics

| | |
|---|---|
| Specific density | 1.12 |
| Viscosity | 130 sec mf |
| Plastic viscosity | 54 cp ($54 \times 10^{-3}$ Pa·s) |
| Yield point | 28 lbs/100 sqft (13.4 Pa) |
| Gel value 0'/10' | 5/12 lbs/100 sqft (2.4-4.7 Pa) |
| Ph | 7.8 |
| API dewatering index | 5.0 cm$^2$ |
| Cuttings content | 5% Mikhart 130 |

### Sieve capacities achieved:

| | |
|---|---|
| with 40 mesh (16 openings/cm) sieves | > 50 m$^3$/hour |
| with 60 mesh (24 openings/cm) sieves | 50 m$^3$/hour |

## Claims

1. A method of separating and recovering a granulate from a viscous suspension containing said granulate by supplying the suspension in a layer onto an endless sieve belt (1) guided around return rollers (22,23) and effecting a separation into a sieve residue containing granulate which remains behind on the belt (1), and a stream of material passed through the belt and in which said stream of material is collected between the forward (20) and return (21) runs of the sieve conveyor belt (1), and the separated granulate is dumped from the conveyor belt, characterized in that, the supply of granulate containing suspension by pouring from a height of at least 20cm onto the sieve belt (1), a stream of air maintained by one or more air moving means (30-32) and passed downwardly through the conveyor belt (1), the velocity of the sieve conveyor belt (1) and optionally a vibration to which the belt (1) is exposed, are mutually adjusted in such a manner that there is created and maintained at least one edge forming a borderline between the suspension region and the granulate region where the liquid stream has already passed downwardly through the belt (20).

2. A method as claimed in claim 1, characterized in that the stream of air passed through the sieve conveyor belt (1) has, on average, a velocity of at least about 4-5 m/sec.

3. Apparatus for carrying out the method as claimed in any of the preceding claims, comprising a sieve belt (1) passed around return rollers (22,23) and defining a sieve run (20) and a return run (21); means (30-32) for creating a pressure difference over at least part of the sieve run (20); means (29,24) for supplying a granulate containing suspension onto the up-stream end of the sieve run (20); means (2,3,4) for collecting and discharging the stream of material passed through the sieve belt; and means for collecting and discharging the sieve residue remaining behind on the sieve belt, characterized in that the means for creating a pressure difference over the sieve run comprise one or more blowers (30-32) having their intake lines (2-4) arranged under substantially the entire length of the sieve run (20), in that the means (29,24) for supplying the suspension onto the sieve run (20) comprise a pouring slit (24) arranged at least 20 cm above the said sieve run (20), in that means are provided for regulating the velocity of the sieve belt (1) and in that optionally means for creating vibrations in the sieve belt (1) are provided.

4. Apparatus as claimed in claim 3, in which the sieve run (20) of the sieve belt (1) is supported on one or more liquid discharging means, characterized in that said liquid discharging means (40) are arranged to exert a scraping on the sieve conveyor belt in operation.

**Revendications**

1. Procédé pour séparer et récupérer des granules à partir d'une suspension visqueuse contenant lesdits granules en amenant la suspension formant une couche sur une bande sans fin de tamisage (1) guidée autour de rouleaux de renvoi (22,23) et en effectuant une séparation en un résidu de tamisage contenant les granules, qui demeure sur la bande (1), et un courant de matière traversant la bande, et dans lequel ledit courant de matière est recueilli entre le brin avant (20) et le brin de retour (21) de la bande transporteuse de tamisage (1), et les granules séparés étant déchargés de la bande transporteuse,
caractérisé en ce que l'amenée de la suspension contenant les granules en versant d'une hauteur d'au moins 20 cm sur la bande de tamisage (1), un courant d'air entretenu par un ou plusieurs moyens de déplacement d'air (30-32) et traversant vers le bas la bande transporteuse (1), la vitesse de la bande transporteuse de tamisage (1), et, éventuellement, des vibrations auxquelles la bande (1) est exposée, sont mutuellement réglés de sorte qu'il est créé et entretenu au moins un bord formant une frontière entre la zone de la suspension et la zone des granules où le courant de liquide a déjà traversé vers le bas la bande (20).

2. procédé selon la revendication 1,
caractérisé en ce que le courant d'air traversant la bande transporteuse de tamisage (1) présente, en moyenne, une vitesse d'au moins environ 4-5 m/s.

3. Appareil pour mettre en oeuvre le procédé selon l'une quelconque des revendications précédentes, comprenant une bande de tamisage (1) passant autour de rouleaux de renvoi (22,23) et définissant un brin de tamisage (20) et un brin de retour (21) ; des moyens (30-32) pour créer une différence de pression sur au moins une partie du brin de tamisage (20) ; des moyens (29,24) pour amener une suspension contenant des granules sur l'extrémité amont du brin de tamisage (20); des moyens (2,3,4) pour recueillir et évacuer le courant de matière traversant la bande de tamisage ; et des moyens pour recueillir et évacuer le résidu de tamisage demeurant sur la bande de tamisage, caractérisé en ce que les moyens pour créer une différence de pression sur le brin de tamisage comprennent un ou plusieurs ventilateurs (30-32) ayant leurs lignes d'admission (2-4) agencées sous sensiblement toute la longueur du brin de tamisage (20), en ce que les moyens (29,24) pour amener la suspension sur le brin de tamisage (20) comprennent une fente de déversement (24) agencée au moins 20 cm au-dessus dudit brin de tamisage (20), en ce que des moyens sont prévus pour réguler la vitesse de la bande de tamisage (1) et en ce que, éventuellement, des moyens pour créer des vibrations dans la bande de tamisage (1) sont prévus.

4. Appareil selon la revendication 3, dans lequel le brin de tamisage (20) de la bande (1) est supporté sur un ou plusieurs moyens d'évacuation de liquide,
caractérisé en ce que lesdits moyens d'évacuation de liquide (40) sont agencés pour exercer un raclage sur la bande transporteuse de tamisage en service.

**Ansprüche**

1.  Verfahren zum Trennen und Zurückgewinnen von Körnchen aus einer viskosen Suspension, die das Körnchengranulat enthält, durch Zuführen der Suspension in einer Schicht auf einem Endlossiebfördergurt (1), der um Stützrollen (22,23) herum geführt ist, und durch Bewirken der Trennung in einen Siebrückstand, der das Körnchengranulat enthält, welches auf dem Band (1) zurückbleibt, und in einen Materialstrom, der durch das Band hindurchfließt, und in welchem der Materialstrom zwischen dem vorwärtigen (20) und dem rückwärtigen (21) Lauf des Siebfördergurtes (1) gesammelt wird und die abgetrennten Körnchen von dem Fördergurt abgeladen werden, **dadurch gekennzeichnet,** daß der Zufluß von Körnchengranulat enthaltender Suspension aus einer Höhe von mindestens 20 cm auf den Fördergurt (1) gegossen wird, daß ein Luftstrom durch mindestens ein Luftbewegungsmittel (30, 32) erzeugt und abwärts auf und durch den Fördergurt (1) geleitet wird, daß die Geschwindigkeit des Siebförderbandes (1) und eventuell eine Vibration, die auf das Förderband (1) wirkt, gleichzeitig derart eingestellt werden, daß mindestens eine eine Trennlinie bildende Kante zwischen dem Suspensionsbereich und dem Granulatbereich geschaffen und erhalten wird, wo der Flüssigkeitsstrom bereits abwärts durch den Gurt (20) hindurch geflossen ist.

2.  Verfahren nach Anspruch 1, dadurch gekennzeichnet, daß der durch den Siebfördergurt (1) hindurchgeleitete Luftstrom im Mittel eine Geschwindigkeit von mindestens ungefähr 4 bis 5 Meter pro Sekunde aufweist.

3.  Vorrichtung zur Durchführung des Verfahrens nach einem der vorstehenden Ansprüche, mit einem Siebgurt (1), der um Stützrollen (22,23) herum geführt ist und ein Siebband (20) und ein Rücklaufband (21) bildet, mit Mitteln (30-32) zur Erzeugung einer Druckdifferenz über mindestens einen Abschnitt des Siebbandes (20), mit Mitteln (29, 24) zur Zuführung einer ein Granulat enthaltenden Suspension auf das stromaufwärts gerichtete Ende des Siebbandes (20), mit Mitteln (2, 3, 4) zum Sammeln und Abgeben des durch den Siebgurt hindurchgeflossenen Materialstroms, und mit Mitteln zum Sammeln und Abgeben des Siebrückstandes, der auf dem Siebgurt zurückbleibt, **dadurch gekennzeichnet,** daß die Mittel zur Erzeugung einer Druckdifferenz über den Siebgurt ein oder mehrere Gebläse (30-32) umfassen, die Einlassstutzen (2-4) aufweisen, die im wesentlichen unter der gesamten Länge des Siebgurtes (20) angeordnet sind, daß die Mittel (29, 24) zur Zuführung der Suspension auf das Siebband (20) einen Ausgießschlitz (24) aufweisen, der mindestens 20 cm oberhalb des Siebgurtes (20) angeordnet ist, daß Mittel zur Regelung der Geschwindigkeit des Siebgurtes (1) vorgesehen sind und daß eventuell Mittel zur Erzeugung von Vibrationen in dem Siebgurt (1) vorgesehen sind.

4.  Vorrichtung nach Anspruch 3, bei der das Siebförderband (20) des Siebgurtes (1) durch ein oder mehrere flüssigkeitsabgebende Mittel getragen wird, dadurch gekennzeichnet, daß die flüssigkeitsabgebenden Mittel (40) derart angeordnet sind, daß eine abtragende Wirkung auf das Förderband während des Betriebs ausübbar ist.

# FIG.1

# FIG.2